# EUROPEAN PATENT APPLICATION

(11) **EP 1 064 831 A2**
(43) Date of publication of application: **03.01.2001**
(21) Application number: 00304805.5
(22) Date of filing: 06.06.2000
(51) Int. Cl.: A01B 25/00

(54) **Agricultural machine**

(30) Priority: 12.06.1999 GB 9913621
(71) Applicant: Green, Chris, Ferrensby, Knaresborough HG5 0GA (GB)
(72) Inventor: The designation of the inventor has not yet been filed
(74) Representative: Waddington, Richard

(57) **Abstract**

A harrow comprises a frame (2) which supports cutting means (6, 8) and a lift mechanism (48). An engine (10) is mounted on the frame (2) and is adapted to be connected to and to operate an auxiliary device (16). A linkage arrangement (22) is provided at the rear of the frame (2), the linkage arrangement (22) being adapted to be connected to the auxiliary device (16). The lift mechanism (48) is operable to move the linkage arrangement (22) between a raised position and a lowered position.

## Description

The present invention relates to an agricultural machine and, in particular, to a harrow, typically a disc harrow, which breaks clods by cutting to reduce clod size and consolidates the seed bed.

In general, conventional disc harrows have been used as a stubble working tool and also in set-a-side to remove weeds and trash. There is however a greater role for disc harrows to play and that is to become the primary tool in the cultivation of early sown wheat. Early sowing of wheat is becoming more fashionable for several reasons.
(a) lower rates of seed, very strong and robust plants that can grow away from most slug problems;
(b) the knowledge that the sowing is complete in good weather;
(c) but most of all the great yield potential of early sown wheat.

Early sowing of wheat means just that - early. Planting must be well under way in August. From my own experience ploughing takes too long and there is also much harvesting to be done at the critical drilling dates. Soil moisture can be lost and most of all crop nutrients are ploughed down.

With an early sowing regime the rules are as follows:
(a) moisture retention is paramount
(b) August sown wheat at between 2.5 stone and 4 stone per acre;
(c) The key is plant vigour in September, plant nutrient left by a crop of rape or peas must not be ploughed down.

With these objectives in mind an implement has been invented with disc harrows as the primary source of cultivation.

According to the invention there is provided a harrow comprising a frame which supports cutting means and a lift mechanism, an engine mounted on said frame and being adapted to be connected to and to operate an auxiliary device, and a linkage arrangement provided at the rear of said frame, such linkage arrangement being adapted to be connected to such auxiliary device, said lift mechanism being operable to move said linkage arrangement between a raised position and a lowered position.

Said engine is not adapted to drive the harrow. Preferably, the harrow is to be towed by a tractor or the like. Preferably, the lift mechanism is operable from such tractor. Preferably, the front end of the frame is adapted to be detachably connected to a tractor's lower link arms to enable the front depth to be governed and raised for transport on the road.

Preferably, the frame comprises a base section, upstanding side sections and an upstanding rear section. Preferably, the harrow comprises a take-off drive adapted to be connected to an auxiliary device to power such device. Preferably, the harrow comprises a pair of wheels on an axle. Preferably, such axle and wheel pair is provided at a position adjacent the rear of said frame. Preferably, the cutting means comprises one or more sets of cutting discs. Preferably, said cutting means are provided at a position on the frame forwardly of said wheel pair. The cutting means may be a packer and/or a crumbler roller. The cutting means may be a flexible coil, a tine or a pressing ring.

Preferably, said lift mechanism comprises a hydraulic lift. Preferably, two such lift mechanisms are provided, one adjacent each side of the frame. Preferably, such hydraulic lifts are upstanding from the base of the frame. Preferably, such hydraulic lifts are provided at the rear of the frame.

Preferably, such linkage arrangement comprises one or more, typically three, link members. Preferably, such link members are pivotally connected at respective first ends thereof to said frame or said lift mechanism, typically at least one such member is connected to said lift mechanism. Preferably, a linkage arrangement is provided to correspond with each lift mechanism. Preferably, such linkage arrangement is provided at each side of said frame.

Preferably, such linkage arrangement comprises a back plate. Preferably, the respective other ends of said link members are pivotally connected to said back plate. Alternatively, the respective other ends of said link members may be adapted to be connected to an auxiliary device. Preferably, said back plate is adapted to be connected to an auxiliary device. Preferably, at least one of said link members in each such linkage arrangement comprises an hydraulic lift member.

The invention will now be described further by way of example only and with reference to the accompanying drawings in which:-
Fig. 1 is a side view of a harrow according to one embodiment of the invention, with the linkage in the lowered position;
Fig. 2 is a side view of part of an alternative harrow of the invention with the linkage in the raised position;
Fig. 3 is a plan view corresponding to Figure 2; and
Fig. 4 is a partial schematic side view of an alternative arrangement of a front end of a frame of the harrow.

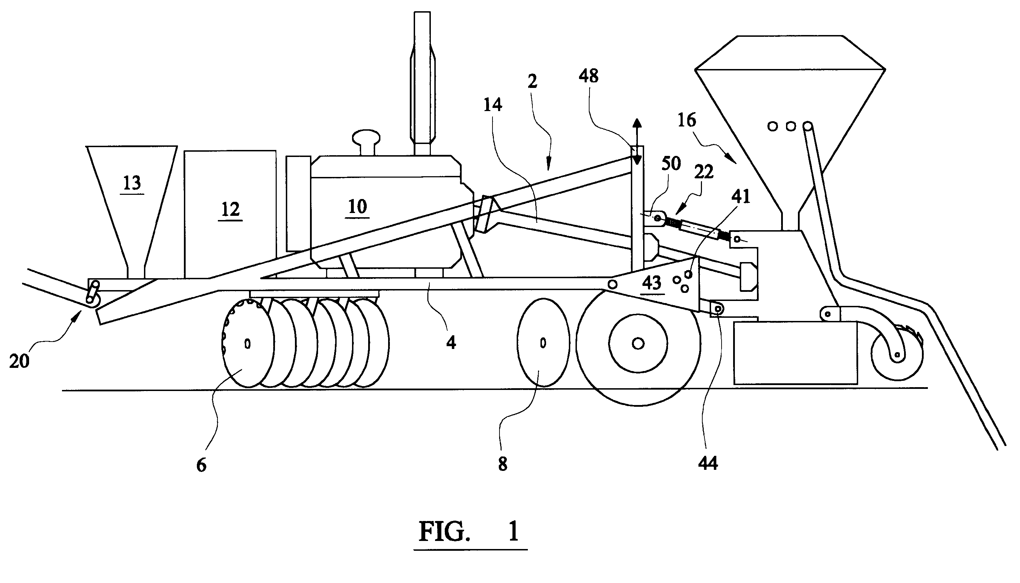

Referring to Figure 1, a harrow according to one embodiment of the invention comprises a frame 2 from the base 4 of which depend cutting discs 6, 8. The base 4 of the frame supports an engine 10 and a fuel tank 12. The engine 10 drives a take-off drive 14 which may be used to power an auxiliary device such as a power harrow and drill for sowing seeds 16, a fertiliser spreader or the like. The cutting discs may be replaced by a packer/crumbler roller, a flexible coil, tines or a pressing ring arrangement.

The frame 2 has a generally rectangular base frame 4 and generally triangular side frame sections 18 upstanding from the base frame 4. The front end of the frame 2 is adapted to be detachably connected to a tractor's lower lift arms or the like by means of a suitable pin and socket arrangement 20 or otherwise.

The rear end of the frame 2 supports a linkage arrangement 22 for detachably connecting an auxiliary device 16 to the rear end of the harrow. The take-off drive 14 is adapted to be connected to a drive shaft 24 of such auxiliary device via a suitable coupling 26.

The rear end of the frame is supported by a pair of wheels 28. In will be noted that the wheel pair 28 is located towards the rear of the frame 2 whereas the cutting discs 6, 8 are located on the frame 2 forwardly of the wheel pair 28. Such an arrangement gives improved counter balance and weight distribution to off-set a heavy auxiliary device.

It will also be noted that depth control means 60, such as a screw type adjustment arrangement, may be provided for setting the depth of cutting disc 6 and ride height of frame 2.

In the embodiment shown in figure 1, a lateral plate member 43 is provided at each side of the frame. The lateral plate member has a plurality of apertures 41, typically three, for receiving pins. In use, the auxiliary device may be raised and a pin inserted through one of the apertures so that the adjacent link arms rest on the pin and the auxiliary device is maintained at a corresponding height for road use.

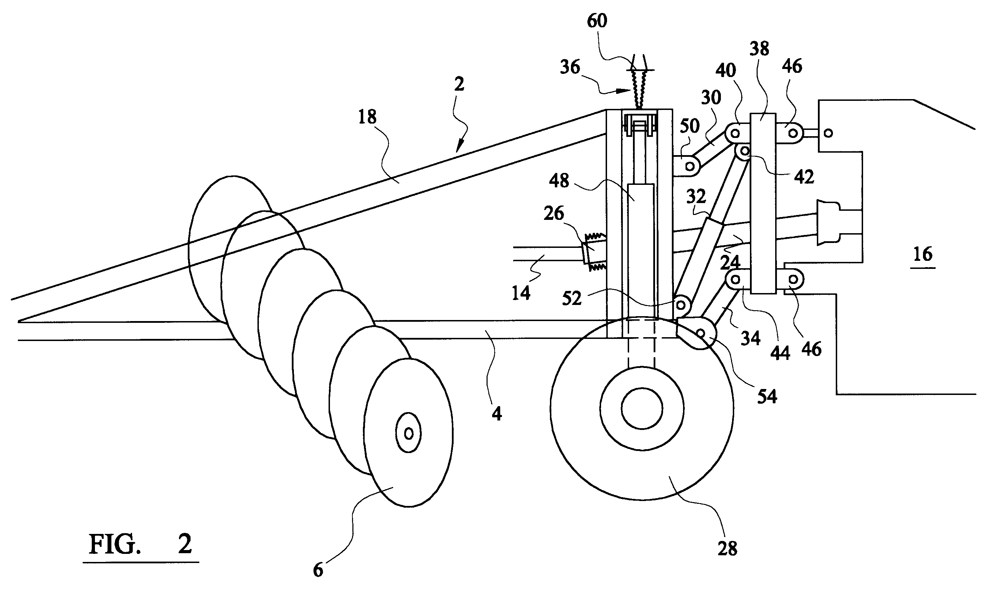

The linkage arrangement as shown in Figure 2 comprise three link members 30, 32, 34 pivotally connected at first ends thereof to a upstanding rear section 36 of the frame. The other ends of the link members are pivotally connected to a back plate 38 at respective fixed pivot mounts 40, 42, 44. The back plate 38 has suitable mounting means 46, such as a pin and socket arrangement, for mounting the auxiliary device 16 to the back plate.

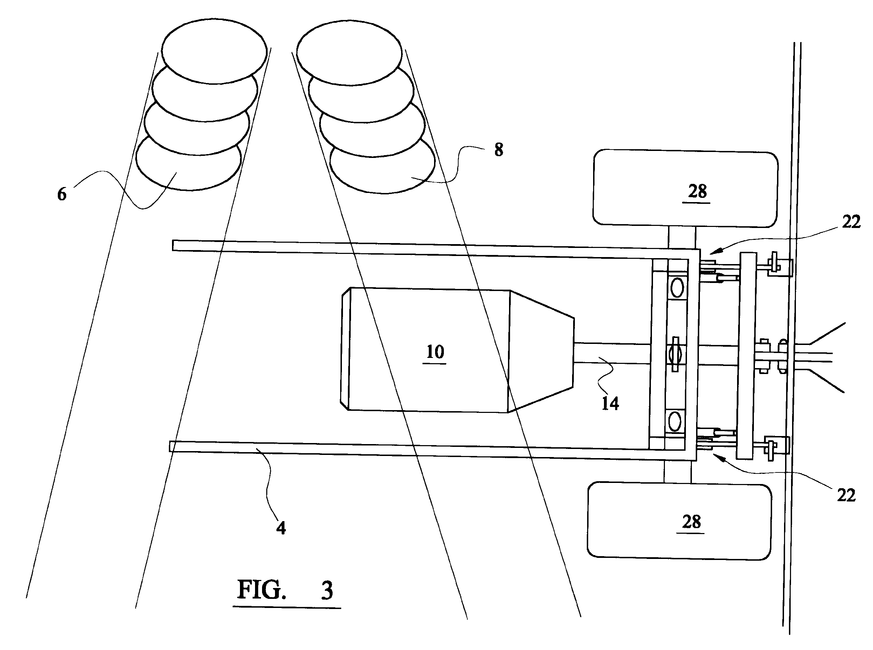

Such a linkage arrangement 22 is provided at each lateral side of the harrow so that three link members are connected to each side of the back plate 38; as shown in Figure 3.

The rear frame section 36 supports lifting mechanisms 48, typically two; one on each side of the frame. The lifting mechanism may have any suitable form but preferably comprises a first hydraulic lift which can lift the disc harrows at the rear and the auxiliary device 16, or lower the disc harrows and auxiliary device 16. In use, this would be done at the end of every pass and for road travel.

Typically the two upper and lower link members 30, 34 are solid members and the central link members are second hydraulic lift members. Typically the upper, central and lower pivot connections 50, 52, 54 are fixed to the frame section 36.

When attaching an auxiliary device 16 to the back plate 38, the hydraulic lift mechanisms 32 are operated to raise and lower the pivot connections 40, 44 of the back plate thereby causing the link members 30, 34 to pivot.

Referring to Figure 1, a linkage arrangement comprises lift mechanisms 48 as described with reference to Figure 2 and upper and lower link members similar to those described with reference to Figure 2. However, in this embodiment the hydraulic lift members 32 and the back plate 38 are omitted. The remote ends of the upper and lower link members are adapted to be connected directly to the auxiliary device 16. The operation is similar to that described with reference to Figure 2 in so far as the lift mechanisms 48 are operable to raise the frame 2 and pivot connections 50, 52, 54 thereby raising the auxiliary device 16.

Typically a 30 gallon fuel tank and a 4 cylinder, 70-80 horse power engine may be used. A ballast or a seed tank 13 with cross auger may be provided on the frame in front of the fuel tank. The wheel pair and axle 28 typically has sufficient strength to support the disc harrow and an auxiliary device such as a power harrow and drill. A container for grain or fertiliser, such as a 1 ton hopper, may be mounted at the front of the harrow. Typically the harrow of the invention supports heavy duty cultivator discs 6, 8.

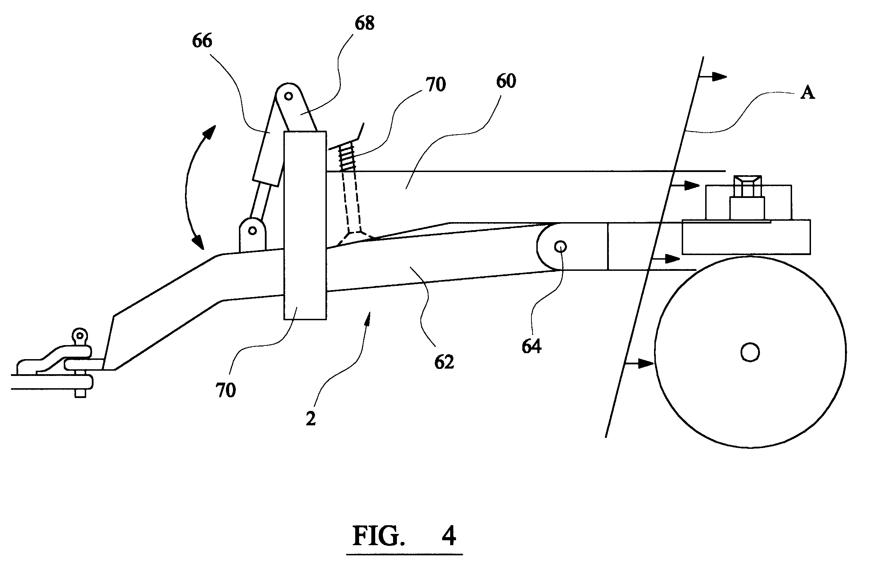

In the alternative arrangement shown in Figure 4 a front section of the frame 2 comprises connected upper and lower sections 60 and 62 respectively. The upper and lower sections 60 and 62 are connected by a pivotable link 64 and by an extendible hydraulic lift 66.

An upper end of the hydraulic lift is secured to a pivotable brace 68 held on a support 70 which is fixed to the upper section 60. A lower end of the hydraulic lift 66 is secured to the lower section 62.

A depth control screw 70 is located on the upper section 60, and has the same operation as the depth control 48 described above.

The remainder of the harrow in Figure 4 to the right of the line marked A is the same as that in the embodiments described above.

In use when the hydraulic lift 66 is extended the upper section 60 of the frame 2 (and so the discs 6) is raised. At its fullest extension the discs are held at a sufficient height to allow the harrow to be transported by road.

When the hydraulic lift is shortened the discs 6 are lowered to allow the harrow to be used. Fine height adjustment can be achieved with depth control screw 70.

It will be seen that a harrow of the invention can be attached to a tractor for use as a disc harrow and can be used alone or in combination with an auxiliary device such as a drill, sub-soiler, tine cultivator, fertiliser spreader or the like, the latter being easily dismountable and interchangeable. Since the harrow of the invention can be used with conventional auxiliary devices without adaptation, these can continue to be used directly with a tractor where required so that the harrow of the invention gives the farmer greater versatility. This is particularly advantageous for any farmer large or small.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A harrow comprising a frame (2) which supports cutting means (6, 8) and a lift mechanism (48), an engine (10) mounted on said frame (2) and being adapted to be connected to and to operate an auxiliary device (16), and a linkage arrangement (22) provided at the rear of said frame (2), such linkage arrangement (22) being adapted to be connected to such auxiliary device (16), said lift mechanism (48) being operable to move said linkage arrangement (22) between a raised position and a lowered position.

2. A harrow according to claim 1, wherein said engine (10) is not adapted to drive the harrow.

3. A harrow according to any preceding claim, wherein the front end of the frame (2) is adapted to be detachably connected to a tractor.

4. A harrow according to any preceding claim, wherein the frame (2) comprises a base section (4), upstanding side sections (18) and an upstanding rear section (36).

5. A harrow according to any preceding claim, further comprising a take-off drive (14) adapted to be connected to an auxiliary device (16).

6. A harrow according to any preceding claim, comprising a pair of wheels (28) provided at a position adjacent the rear of said frame (2).

7. A harrow according to any claim 6, wherein said cutting means (6, 8) are provided at a position on the frame (2) forwardly of said wheel pair (28).

8. A harrow according to any preceding claim, wherein said lift mechanism (48) comprises a hydraulic lift.

9. A harrow according to any preceding claim, wherein two such lift mechanisms (48) are provided, one adjacent each side of the frame (2).

10. A harrow according to any preceding claim, wherein such linkage arrangement (22) is provided at each side of said frame (2).

11. A harrow substantially as hereinbefore described with reference to and as illustrated in the accompanying drawings.
